# EUROPEAN PATENT SPECIFICATION

(11) **EP 1 540 206 B1**
(45) Date of publication and mention of the grant of the patent: **03.01.2007**
(21) Application number: 03764701.3
(22) Date of filing: 10.07.2003
(51) Int. Cl.: F16H 7/12

(54) **TENSIONING MECHANISM FOR LOCKED-CENTER IDLER**
SPANNUNGSMECHANISMUS FÜR SPANNROLLE MIT VERRIEGELTER MITTE
MECANISME DE TENSION DESTINE A UN PIGNON A CENTRE VERROUILLE

(30) Priority: 11.07.2002 US 395773 P
(43) Date of publication of application: 15.06.2005
(73) Proprietor: THE GATES CORPORATION, Denver, CO 80202 (US)
(72) Inventor: SERKH, Alexander, Troy, MI 48098-4696 (US); DEC, Andrzej, Rochester Hills, MI 48307 (US)
(74) Representative: Tunstall, Christopher Stephen
(86) International application number: PCT/US2003/022139
(87) International publication number: WO 2004/008000

(56) References cited:
- EP-A- 0 053 954
- DE-A- 3 906 787
- US-A- 4 017 059
- US-A- 4 767 383
- PATENT ABSTRACTS OF JAPAN vol. 011, no. 380 (M-650), 11 December 1987 (1987-12-11) -& JP 62 151657 A (KOYO SEIKO CO LTD), 6 July 1987 (1987-07-06)
- PATENT ABSTRACTS OF JAPAN vol. 008, no. 195 (M-323), 7 September 1984 (1984-09-07) -& JP 59 083857 A (KOYO SEIKO KK), 15 May 1984 (1984-05-15)
- PATENT ABSTRACTS OF JAPAN vol. 1999, no. 01, 29 January 1999 (1999-01-29) -& JP 10 267094 A (NTN CORP), 6 October 1998 (1998-10-06)
- DATABASE WPI Section PQ, Week 198740 Derwent Publications Ltd., London, GB; Class Q64, AN 1987-283017 XP002260288 -& SU 1 295 098 A (SOYUZUGLEMASH DES-C), 7 March 1987 (1987-03-07)

## Description

### Field of the Invention

This invention relates generally to an automatic locked-center idler for tensioning a power transmission belt of a belt drive system. Particularly, this invention relates to an automatic locked-center idler that provides an initial tension setting for a belt drive system. Specifically, this invention relates to such an automatic locked-center idler for a power transmission belt drive system to drive accessories of an internal combustion engine use.

### Description of the Prior Art

It is known to use a locked-center idler in conjunction with an accessory belt drive system, for an internal combustion engine, that provides an initial belt tension to remove slack from the belt. For one version of locked-center idler, the installation entails first fastening the idler loosely in place. The installer then forces the idler, including its tensioning member supporting the pulley and the pulley, against the power transmission belt to create substantial tension upon the belt. While holding the idler in this condition, the installer must then tighten the fastener of the idler to fix it in place. This installation procedure is fairly strenuous, particularly when performed repeatedly throughout a shift. Further, it is prone to error. The idler can readily be tightened with insufficient tension or no tension placed upon the belt.

JP-59-083857 discloses a locked center idler according to the preamble of claim 1 and a method for applying tension to a belt drive transmission according to the preamble of claim 5.

Another version of locked-center idler incorporates a pre-loaded spring. Installation of this version entails fastening the idler firmly in place. Then, activating the pre-loaded spring moves the pulley into tensioning position against the belt. This installation procedure is less strenuous and less prone to error. There is less opportunity for the idler to provide some but insufficient belt tension. However, this procedure still allows an installation where activation of the pre-loaded spring is forgotten. Thus, no initial tension is placed upon the belt. Further, this version of locked-center idler is more complicated in design and construction with the attendant increase in expense to build.

Prior art locked-center idlers have been limited to being either difficult and error prone to install, or more complicated of design and still relatively error prone to install. Accordingly, there is a continuing need for a locked-center idler that is at once less strenuous to install, less prone to being incorrectly installed, but remains simple in design and construction.

The object of the invention is achieved by means of a locked center idler according to claim 1 and a method of applying tension to a belt drive power transmission system according to claim 5.

### Summary of the Invention

An automatic locked-center idler is disclosed herein. The invention is an improved locked-center idler of the type having a pulley supported by a bearing. The bearing is mounted upon a tension adjusting member. It is improved by the tension adjusting member being in communication with a dual function fastener.

### Brief Description of the Drawings

The accompanying drawings, which are incorporated in and form part of the specification in which like numerals designate like parts, illustrate preferred embodiments of the present invention and together with the description, serve to explain the principles of the invention. In the drawings:
Figure 1 is a plan view of a preferred embodiment of an automatic locked-center idler;
Figure 2 is a section of the preferred embodiment of an automatic locked-center idler depicted in Figure 2 taken along line 2-2;
Figure 3 is a plan view of a preferred embodiment of an automatic locked-center idler;
Figure 4 is a section of the preferred embodiment of an automatic locked-center idler depicted in Figure 3 taken along line 4-4;
Figure 5 is a plan view of a preferred embodiment of an automatic locked-center idler; and,
Figure 6 is a section of the preferred embodiment of an automatic locked-center idler depicted in Figure 5 taken along line 6-6;

### Detailed description of the Preferred Embodiments

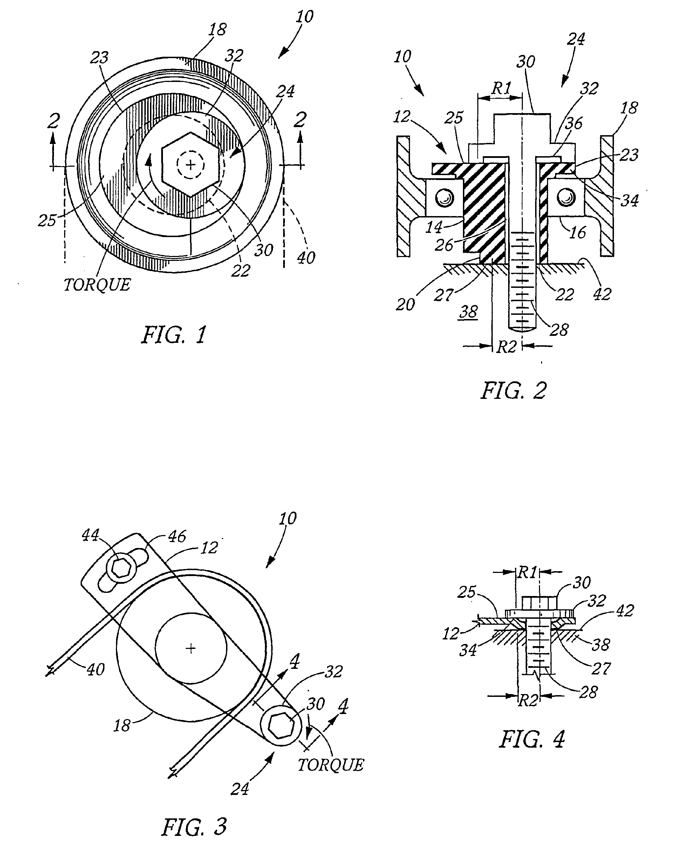

Figures 1 and 2 depict a preferred embodiment of automatic locked-center idler 10. It includes tensioning member 12 as a tension adjusting member having main cylindrical portion 14 which supports bearing 16. The bearing 16 depicted is of the most commonly used type for such applications, a ball bearing. However, other bearing types may be appropriate. Pulley 18 is mounted upon bearing 16 in common fashion. Tensioning member 12 further includes secondary cylindrical portion 20 having eccentric bore 22 running axially there through and through main cylindrical portion 14. Extending radially above main cylindrical portion is ledge 23 having reaction friction surface 25. Under secondary cylindrical portion 20 is resistance friction surface 27.

Locked-center idler 10 also includes dual function fastener 24. Dual function fastener 24 has shaft 26, upon which are threads 28. Dual function fastener also includes head 30 which is depicted as hexagonal. However, any appropriate head shape is contemplated. Extending radially from shaft 28 and adjacent to head 30 is flange 32. Flange 32 further includes reaction mating surface 34 and annular recess 36. The average radius of the contact of reaction mating surface 34 upon reaction friction surface 25 is defined as reaction radius R1. The average radius of the contact of resistance friction surface 27 upon mount 38 is defined as R2.

In practice, automatic locked-center idler 10 is assembled as depicted in Figures 1 and 2. Automatic locked-center idler 10 is placed upon mount 38. Mount 38 can be the cylinder block of an internal combustion engine or a separate structure that is immobile in reference to the cylinder block. Power transmission belt 40 is trained about pulley 18. Dual function fastener 24 is threaded into mating threads (not depicted) of mount 38. Dual function fastener 24 is tightened. As dual function fastener 24 is tightened: 1) tensioning member 12 is clamped between mount 38 and reaction mating surface 34; and, 2) flange 32 and reaction mating surface 34 rotate.

It is fundamental that the torque generated by the reaction friction between reaction friction surface 25 and reaction mating surface 34, the reaction torque, is greater than the torque generated by the resistance friction between resistance friction surface 27 and mounting surface 42 of mount 38, the resistance torque.

These relative torques can be accomplished in a number of ways. One group of ways is to control the relative coefficients of friction of the reaction friction and the resistance friction. By way of example, this can be done by selection of dissimilar materials. For example, if dual function fastener 24 and tension adjusting member 12 are common steel while mount 38 is aluminum, then the static coefficient of friction giving rise to the reaction friction will be relatively large, approximately .7; the static coefficient of friction giving rise to the resistance friction will be relatively small, approximately .45. However, the dynamic coefficients of friction are much closer together. Further, there can be many overriding factors that may limit which materials are available for this application. Accordingly, selection of materials may not always be available as an effective approach. Another example of controlling relative coefficients of friction is interjecting a lubricant to reduce resistance friction. Further, various coatings can be applied to surfaces 25, 27, 34, or 42 to modify relative coefficients of friction. Additionally, surfaces 25, 27, 34, or 42 can be textured to modify relative coefficients of friction.

Another approach to controlling relative torques is to control the lever arms acted upon by the reaction friction and the resistance friction. As is apparent, the axial force delivered to all surfaces 25, 27, 34, and 42 are the same. Further, torque is the resultant of force acting through a lever arm. If the reaction coefficient of friction equals the resistance coefficient of friction, and radius R1 equals radius R2, then the reaction torque equals the resistance torque. As torque is a linear function relative to the length of the lever arm, the ratio of the two radii R1 and R2 determines the relative levels of torque, prior to slippage of any of surfaces 25, 27, 34, or 42. Accordingly, making radius R1 larger than radius R2, as depicted, results in reaction torque being larger than resistance torque. It can thus be expected that resistance friction surface 27 will slide against mounting surface 42 first, causing resistance torque to drop suddenly as the associated coefficient of friction drops suddenly in going from static to dynamic.

In the embodiment depicted in Figures 1 and 2, with radius R1 larger than radius R2, as dual function fastener 24 is tightened, tensioning member 12 is rotated. Because of the placement of eccentric bore 22, tightening member 12 and pulley 18 move toward belt 40. This leads to a longer path for belt 40 and tightening of belt 40. Once belt 40 reaches a certain degree of tension, the reaction torque minus the resistance torque will no longer be enough to continue to rotate tightening member 12 and slippage will occur between reaction friction surface 25 and reaction mating surface 34. Sometime after this point, dual function fastener is no longer tightened. Belt 40 will have been tightened to the desire setting. Also, automatic locked-center idler will have been affixed to mount 38. The ratio of radius R1 and radius R2 can be chosen to either produce a tension on belt 40 merely enough to remove the slack from the belt or any other operating amount.

Optional annular recess 36 is depicted in this embodiment. Annular recess 36 allows greater control over the point at which tensioning member 12 no longer rotates in response to belt tension. It both makes the mating area of reaction friction surface 25 and reaction mating surface 34 more consistent during tightening of dual function fastener 24 and allows give in flange 32 so that the point at which automatic locked-center idler is adequately fixed to mount 38 is less critical.

The embodiment of Figures 3 and 4 utilizes the same principle of rotating tensioning member 12 by the difference of reaction torque to resistance torque. However, tensioning member 12 is reformed in the shape of the plate depicted in Figures 3 and 4. Tensioning member 12 also includes all necessary remaining structure to support bearing 16 and pulley 18. As with the prior embodiment, reaction torque is the result of torque generated by the reaction friction between reaction friction surface 25 and reaction mating surface 34 multiplied by radius R1 when dual function fastener 24 is placed into dual function fastener receiving bore 52 and tightened. Likewise, resistance torque is the result of torque generated by the resistance friction between resistance friction surface 27 and mounting surface 42 of mount 38 multiplied by radius R2.

This configuration cannot be expected to produce as much tension on belt 40 is can the prior embodiment. The amount of pressure idler 10 can place upon belt 40 is the torque placed upon tension member 12 divided by the length of the lever arm defined by the distance from the center of dual function fastener to the center of pulley 18. As can be seen, the lever arm of the prior embodiment is much shorter than the lever arm of the current embodiment. However, the construction of this embodiment has the advantage that tensioning member 12 is of a plainer design and applicable to certain engine and power transmission drive geometries.

It is contemplated that for those belt drive power transmission systems that operate under high tensions, securing bolt 44 operating within securing slot 46 may be necessary to stabilize the tension supplied by automatic locked-center idler 10.

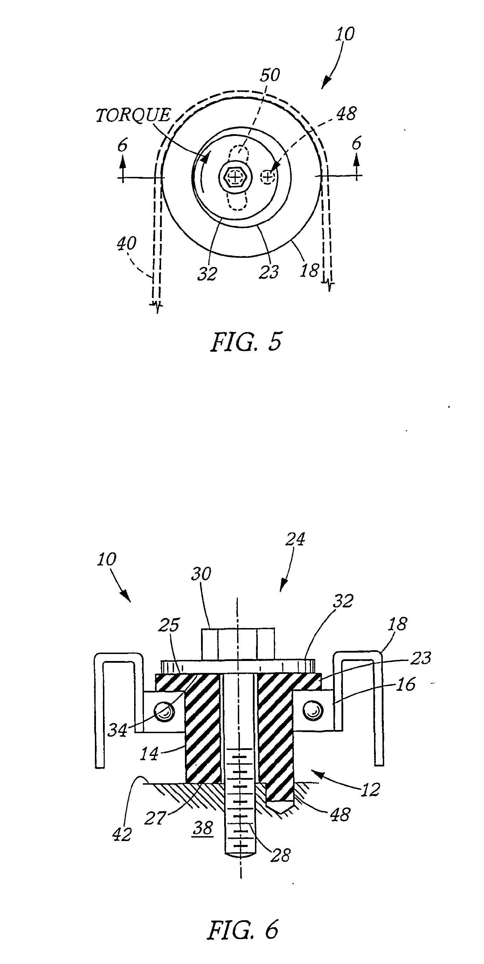

The embodiment of Figures 5 and 6 operates similarly to the embodiment of Figures 1 and 2 and utilizes the same principle of rotating tensioning member 12 by the difference of reaction torque to resistance torque. A substantial difference lies in the point about which tensioning member 12 pivots. In the first embodiment, tensioning member 12 pivots about dual function fastener 24. In the current embodiment, tensioning member 12 pivots about pivot 48 extending axially from resistance friction surface 14. To accommodate the different pivot point, eccentric bore 22 is replaced by tensioning slot 50.

As with the prior embodiments, reaction torque is the result of torque generated by the reaction friction between reaction friction surface 25 and reaction mating surface 34. Likewise, resistance torque is the result of torque generated by the resistance friction between resistance friction surface 27 and mounting surface 42 of mount 38.

In sum, the preferred embodiments described herein and depicted in the Figures allow an automatic locked-center idler of simple design and construction that is installable without being unduely strenuous or error prone..

The foregoing description and illustrative embodiments of the present invention have been shown on the drawings and described in detail in varying modifications and alternative embodiments. It should be understood, however, that the foregoing description of the invention is exemplary only, and that the scope of the invention is to be limited only to the claims as interpreted in view of the prior art.

## Claims

1. A locked-center idler (10) comprising:
a pulley (18) supported by a bearing (16) said bearing (16) mounted upon a tension adjusting member (12) that is itself mounted on a mounting surface (42) about a pivot axis eccentric to the pulley, by means of a dual function fastener (24);
**characterized in that** said tension adjusting member (12) comprises a reaction friction surface (25) and a resistance friction surface (27) and the dual function fastener comprises a reaction mating surface (34); and
wherein said reaction friction surface (25) operates with the reaction mating surface (34) to produce a reaction torque upon said tension adjusting member (12) greater than a resistance torque produced by a cooperation of said resistance friction surface (27) with said mounting surface (42) when said dual function fastener (24) is tightened, thus causing said tension adjusting member (12) to rotate about its pivot axis until restrained by increased tension in a power transmission belt (40) entrained about said pulley (18) and thereafter fixing the position of the tension adjusting member (12).

2. The locked-center idler of claim 1 wherein said tension adjusting member (12) comprises a cylindrical portion (14) adapted to cooperate with an inner portion of a bearing (16) and an eccentric bore (22) axially there through.

3. The locked-center idler of claim 1 wherein said tension adjusting member (12) comprises an arm with a pulley mounting portion and a dual function fastener, receiving bore.

4. The locked-center idler of claim 1 wherein said tension adjusting member (12), comprises a cylindrical portion (14) adapted to cooperate with an inner portion of a bearing (16), a pivot (48) extending axially and offset from the center of said cylindrical portion (14), a curved slot opening through the length of said cylindrical portion (14) and having a mean curvature with an arc that defines a radius about said pivot (48).

5. A method of applying tension to a belt drive power transmission system, **characterized by:**
providing a locked center idler (10) according to claim 1;
attaching said tension adjusting member (12) upon a mount that is substantially immobile in relation to an engine cylinder block with a dual function fastener (24);
training a power transmission belt (40) about said pulley assembly (18); and
applying a tightening torque to said dual function fastener (24), thereby applying tension to said power transmission belt and fixing the position of said tension adjusting member (12).

## Patentansprüche

1. Spannrolle (10) mit verriegelter Mitte, umfassend:
eine von einem Lager (16) gelagerte Riemenscheibe (18), wobei das Lager (16) an einem Spannungseinstellelement (12) angebracht ist, das seinerseits an einer Montagefläche (42) um eine gegenüber der Riemenscheibe exzentrische Drehachse mittels einer Doppelfunktionsbefestigungseinrichtung (24) angebracht ist;
**dadurch gekennzeichnet, dass**
das Spannungseinstellelement (12) eine Reaktionsreibfläche (25) und eine Widerstandsreibfläche (27) aufweist, und die Doppelfunktionsbefestigungseinrichtung, eine Reaktionskontaktfläche (34) aufweist; and
wobei die Reaktionsreibfläche (25) mit der Reaktionskontaktfläche (34) zusammenwirkt, um ein auf das Spannungseinstellelement (12) einwirkendes Reaktionsdrehmoment aufzubringen, das größer als das durch das Zusammenwirken der Widerstandsreibfläche (27) mit der Montagefläche (42) erzeugte Drehmoment ist, wenn die Doppelfunktionsbefestigungseinrichtung (24) festgezogen ist, wodurch das Spannungseinstellelement (12) um seine Drehachse dreht, bis es durch die erhöhte Spannung in einem um die Riemenscheibe (18) umlaufenden Kraftübertragungsriemen (40) zurückgehalten und anschließend die Position des Spannungseinstellelements (12) fixiert wird.

2. Spannrolle mit verriegelter Mitte nach Anspruch 1, bei der das Spannungseinstellelement (12) einen zylindrischen Bereich (14) aufweist, der zum Zusammenwirken mit einem inneren Bereich eines Lagers (16) ausgebildet ist, und eine axial durch diesen hindurchgehenden Bohrung (22) aufweist.

3. Spannrolle mit verriegelter Mitte nach Anspruch 1, bei der das Spannungseinstellelement (12) einen Arm mit einem Riemenscheibenbefestigungsbereich und einer Aufnahmebohrung für die Doppelfunktionsbefestigungseinrichtung aufweist.

4. Spannrolle mit verriegelter Mitte nach Anspruch 1, bei der das Spannungseinstellelement (12) einen zylindrischen Bereich (14), der zum Zusammenwirken mit einem inneren Bereich eines Lagers (16) ausgebildet ist, einen sich axial und von der Mitte des zylindrischen Bereichs (14) versetzt erstreckenden Schwenkzapfen (48), und eine gebogene Schlitzöffnung aufweist, die sich durch die Länge des zylindrischen Bereichs (14) erstreckt und eine durchschnittliche Krümmung mit einem Bogen aufweist, der einen Radius um den Schwenkzapfen (48) definiert.

5. Verfahren zum Aufbringen von Spannung auf ein Riementrieb-Kraftübertragungssystem, **gekennzeichnet durch**
das Vorsehen einer Spannrolle (10) nach Anspruch 1;
das Befestigen des Spannungseinstellelements (12) mittels einer Doppelfunktionsbefestigungseinrichtung (24) an einem Träger, der in bezug auf einen Motorzylinderblock im wesentlichen unbeweglich ist;
das Führen eines Kraftübertragungsriemens (16) um die Riemenscheibenanordnung (18); und
das Aufbringen eines Spanndrehmoments auf die Doppelfunktionsbefestigungseinrichtung (24), wodurch Spannung auf den Kraftübertragungsriemen aufgebracht und die Position des Spannungseinstellelements (12) fixiert wird.

## Revendications

1. Galet tendeur à centre bloqué (10) comprenant :
une poulie (18) supportée par un roulement (16), ledit roulement (16) étant installé sur un élément de réglage de tension (12) qui est lui-même installé sur une surface de montage (42) autour d'un axe de pivot excentré par rapport à la poulie, au moyen d'un élément de fixation à fonction double (24) ; **caractérisé en ce que**
ledit élément de réglage de tension (12) comprend une surface de frottement à réaction (25) et une surface de frottement à résistance (27) et l'élément de fixation à fonction double comprend une surface d'accouplement à réaction (34) ; et
dans lequel ladite surface de frottement à réaction (25) coopère avec la surface d'accouplement à réaction (34) pour produire un couple de réaction sur ledit élément de réglage de tension (12) plus important qu'un couple de résistance produit par une coopération de ladite surface de frottement à résistance (27) avec ladite surface de montage (42) lorsque ledit élément de fixation à fonction double (24) est serré, en amenant donc ledit élément de réglage de tension (12) à tourner autour de son axe de pivot jusqu'à ce qu'il soit retenu par une tension accrue dans une courroie de transmission de puissance (40) entraînée autour de ladite poulie (18) et en déterminant ensuite la position de l'élément de réglage de tension (12).

2. Galet tendeur à centre bloqué selon la revendication 1, dans lequel ledit élément de réglage de tension (12) comprend une partie cylindrique (14) adaptée pour coopérer avec une partie intérieure d'un roulement (16) et un alésage excentré (22) axialement à travers celui-ci.

3. Galet tendeur à centre bloqué selon la revendication 1, dans lequel ledit élément de réglage de tension (12) comprend un bras ayant une partie de montage de poulie et un élément de fixation à fonction double, recevant l'alésage.

4. Galet tendeur à centre bloqué selon la revendication 1, dans lequel ledit élément de réglage de tension (12) comprend une partie cylindrique (14) conçue pour coopérer avec une partie intérieure d'un roulement (16), un pivot (48) s'étendant axialement et décalé par rapport au centre de ladite partie cylindrique (14), une fente courbe s'ouvrant à travers la longueur de ladite partie cylindrique (14) et comportant une courbure moyenne avec un arc qui définit un rayon autour dudit pivot (48).

5. Procédé d'application d'une tension à un système de transmission de puissance par entraînement de courroie, **caractérisé par**
la fourniture d'un galet tendeur à centre bloqué (10) selon la revendication 1 ;
la fixation dudit élément de réglage de tension (12) sur un élément de montage qui est globalement immobile par rapport à un bloc-cylindres de moteur avec un élément de fixation à fonction double (24) ;
l'entraînement d'une courroie de transmission de puissance (40) autour dudit ensemble de poulie (18) ; et
l'application d'un couple de serrage audit élément de fixation à fonction double (24), en appliquant de cette manière une tension à ladite courroie de transmission de puissance et en fixant la position dudit élément de réglage de tension (12).
